# FASCICULE DE BREVET EUROPEEN

(11) **EP 1 657 770 B1**
(45) Date de publication et mention de la délivrance du brevet: **02.01.2013**
(21) Numéro de dépôt: 05292419.8
(22) Date de dépôt: 15.11.2005
(51) Int. Cl.: H01M 8/04

(54) **Procédé pour alimenter en gaz oxygéné une cathode d'une pile à combustible et pile à combustible l'utilisant**
Verfahren zur Versorgung einer Brennstoffzellenkathode mit einem Sauerstoff enthaltenden Gas und Brennstoffzelle damit
Method of feeding a fuel cell cathode with an oxygen containing gas and fuel cell using the same

(30) Priorité: 16.11.2004 FR 0412150
(43) Date de publication de la demande: 17.05.2006
(60) Demande divisionnaire: 12187022.4
(73) Titulaire: DCN, 75015 Paris (FR)
(72) Inventeur: Clavier, Bruno, 44680 Sainte-Pazanne (FR)
(74) Mandataire: Lagrange, Jacques Etienne M.M.

(56) Documents cités:
- WO-A-03/041200
- US-A- 6 015 634
- US-A1- 2002 011 335
- US-A1- 2003 157 390

## Description

La présente invention est relative à un procédé pour alimenter en gaz oxygéné une cathode d'une pile à combustible du type à membrane échangeuse de protons selon la revendication 1 ainsi qu'à une pile à combustible ayant un circuit d'alimentation adapté en conséquence.

Les piles à combustible pour la production d'électricité alimentées en hydrogène et en air sont bien connues en elles-mêmes. Ces piles à combustible sont des dispositifs électrochimiques comportant notamment une membrane échangeuse de protons disposée entre des électrodes. L'une des faces de la membrane échangeuse de protons est alimentée en gaz oxygéné tel que de l'air, l'autre côté de la membrane échangeuse de protons est alimenté en gaz hydrogéné. L'hydrogène fournit des protons qui traversent la membrane et réagissent avec l'oxygène de l'air pour produire de l'eau. Cette réaction engendre une production d'électricité de telle sorte que le côté de la membrane alimenté en air constitue une cathode et le côté de la membrane alimenté en hydrogène constitue une anode. Une telle pile à combustible, qui consomme l'oxygène de l'air, produit de l'électricité et rejette de l'azote et de l'eau. Le document US 2003/0157390 A1 décrit un système comportant une telle pile, ainsi qu'un dispositif permettant d'augmenter la teneur en oxygène du gaz oxygéné alimentant la cathode par rapport à la teneur en oxygène de l'air capté dans l'environnement.

Dans le cas où de telles piles à combustible sont utilisées dans des ambiances confinées, la consommation d'air et le rejet d'azote peut poser des problèmes. C'est le cas, en particulier, lorsque ces piles sont utilisées dans des sous-marins ou pour certains équipements spatiaux. Pour de telles applications, le problème d'alimentation en air des piles pose un problème d'une part, parce que les réserves en air sont limitées, et d'autre part, notamment dans le cadre des applications sous-marines, parce que le rejet d'azote enrichit l'atmosphère en azote et donc l'appauvrit en oxygène. Cet appauvrissement en oxygène peut poser des problèmes, en particulier lorsque l'atmosphère est celle que doit respirer un équipage.

On a proposé d'alimenter ces piles à combustible par des réserves d'air comprimé stockées à proximité, mais ces solutions sont mal appropriées car très encombrantes et, en tout état de cause, rejettent de l'azote dans l'atmosphère ambiante.

Pour remédier à cet inconvénient, il a été proposé d'utiliser des piles alimentées par une réserve d'oxygène pur, ce qui a l'avantage de ne pas rejeter d'azote, et donc de ne pas enrichir en azote l'atmosphère confinée. Mais cette solution présente l'inconvénient de nécessiter l'utilisation de piles spécialement conçues pour fonctionner avec de l'oxygène pur, qui sont particulièrement coûteuses, et dont l'usure des membranes échangeuses de protons, destinées à fonctionner normalement en présence d'air et non pas d'oxygène pur, est très rapide.

Le but de la présente invention est de proposer un moyen pour alimenter en gaz oxygéné des piles à combustible à membrane échangeuse de protons adapté pour fonctionner dans une atmosphère confinée avec un gaz oxygéné comparable à de l'air, qui ne nécessite pas de moyens de stockage encombrants d'air comprimé ou de gaz équivalent, et qui ne rejette pas ou qui rejette peu de gaz neutre tel que l'azote dans l'atmosphère qui l'entoure.

A cet effet, l'invention a pour objet un procédé pour alimenter en gaz oxygéné la cathode d'une pile à combustible du type à membrane échangeuse de protons selon lequel on mélange un gaz riche en oxygène tel que de l'oxygène pur et du gaz effluent de la cathode de façon à constituer un mélange d'alimentation de la cathode contenant plus de 60% de gaz neutre. On considère qu'un gaz riche en oxygène est un gaz qui contient plus de 60%, et de préférence plus de 80% d'oxygène.

De préférence, on piège l'eau du gaz effluent avant recyclage afin que son humidité relative reste inférieure à 100%.

Le gaz neutre est constitué, par exemple, principalement d'azote et/ou de dioxyde de carbone.

De préférence, le mélange est constitué de façon à contenir de 15% à 30% d'oxygène.

De préférence, on mélange l'oxygène avec tout le gaz effluent de la cathode.

Afin de renouveler le gaz recyclé, on peut évacuer une partie du gaz effluent recyclé et introduire du gaz ou du mélange gazeux neutre neuf.

En général, la pression du mélange d'alimentation de la cathode est supérieure à la pression du gaz effluent à la sortie de la cathode et, avant d'effectuer le mélange, on augmente la pression du gaz effluent pour obtenir du gaz effluent surpressé et on ajuste la pression d'alimentation en oxygène pour qu'elle soit sensiblement égale à celle du gaz effluent surpressé.

De préférence, on régule la teneur en oxygène du mélange d'alimentation en oxygène autour d'une consigne fonction de la puissance électrique fournie par la pile à combustible.

Pour réguler la teneur en oxygène du mélangeur d'alimentation de la cathode, on peut mesurer la teneur en oxygène du mélange d'alimentation de la cathode et ajuster la pression d'alimentation en oxygène et la pression du gaz effluent surpressé en fonction de l'écart entre la mesure de la teneur en oxygène et la consigne de teneur en oxygène du gaz d'alimentation de la cathode.

L'invention concerne également une pile à combustible du type à membrane échangeuse de protons selon la revendication 1 comportant un circuit d'alimentation en gaz oxygéné de la cathode alimenté par une source de gaz oxygéné riche en oxygène et un circuit d'évacuation du gaz effluent de la cathode, et un moyen pour faire un appoint en gaz neutre dans laquelle le circuit d'évacuation du gaz effluent est prolongé jusqu'au circuit d'alimentation en gaz oxygéné en amont de la cathode, de façon à permettre l'alimentation de la cathode par un mélange d'oxygène et de gaz effluent recyclé.

De préférence, en amont du point de jonction avec le circuit d'alimentation de la cathode, le circuit de gaz effluent comprend un moyen pour évacuer de l'eau contenue dans le gaz effluent, un moyen pour purger au moins partiellement le circuit de gaz effluent, un moyen pour comprimer le gaz effluent et le circuit d'alimentation de la cathode comprend, en amont du point de jonction avec le circuit de gaz effluent, un moyen pour ajuster la pression d'alimentation en gaz oxygéné.

Le moyen pour comprimer le gaz effluent est par exemple un suppresseur pilotable, le moyen pour ajuster la pression d'alimentation en gaz oxygéné riche en oxygène est pilotable et, par exemple, est un détendeur pilotable. De préférence, un dispositif pour mesurer la teneur en oxygène du gaz d'alimentation de la cathode est disposé sur le circuit d'alimentation de la cathode en aval du point de jonction avec le circuit de gaz effluent recyclé.

Le dispositif de mesure de la teneur en oxygène, le moyen pour ajuster la pression d'alimentation en gaz oxygéné et le moyen pour comprimer le gaz effluent peuvent être reliés à un moyen de commande et de régulation.

La source de gaz oxygéné riche en oxygène est par exemple une source d'oxygène et la source de gaz neutre d'appoint est une source d'azote ou de dioxyde de carbone ou d'un mélange de ces deux gaz.

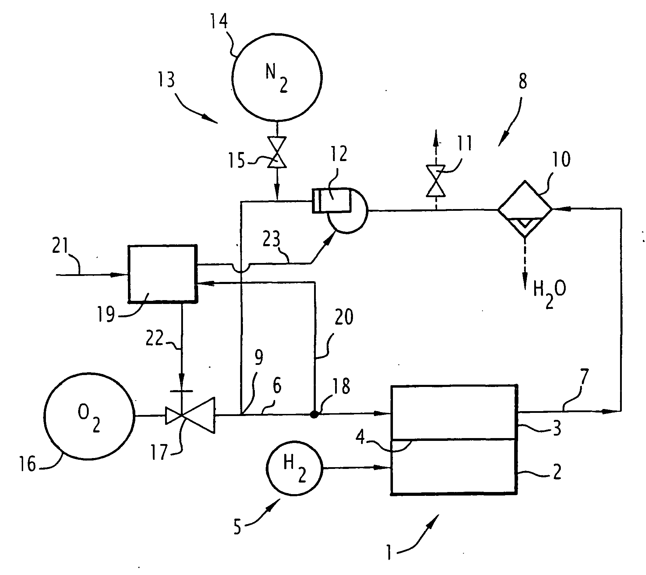

L'invention va maintenant être décrite de façon plus précise mais non limitative en regard de l'unique figure annexée qui représente de façon schématique un circuit d'alimentation en gaz oxygéné d'une pile à combustible à membrane échangeuse de protons.

Sur la figure, on a représenté de façon schématique une pile à combustible repérée généralement par 1 et constituée d'un compartiment anodique 2 et d'un compartiment cathodique 3 séparés par un électrolyte telle qu'une membrane échangeuse de protons 4. Le compartiment anodique 2 est alimenté en hydrogène ou en gaz hydrogéné par une source 5 d'un gaz de ce type. Le compartiment cathodique 3 est alimenté en gaz oxygéné par l'ensemble du circuit qui sera décrit ultérieurement.

On notera que, dans cette représentation schématique, la pile à combustible est constituée d'un compartiment anodique séparé d'un compartiment cathodique par une membrane échangeuse de protons. Mais une pile réelle est constituée en général d'une pluralité de cellules actives empilées qui sont constituées chacune d'un compartiment anodique et d'un compartiment cathodique séparés par une membrane échangeuse de protons. Ces cellules sont alimentées en parallèle d'une part par le gaz oxygéné, d'autre part par le gaz hydrogéné, et elles sont connectées électriquement en série.

Dans tout le texte, quand on parle de compartiment anodique ou de compartiment cathodique, on considère que cela représente l'ensemble des compartiments anodiques ou l'ensemble des compartiments cathodiques des cellules élémentaires d'une pile à combustible. Par souci de simplification les compartiments anodiques et cathodiques sont appelés également anode et cathode.

Le compartiment cathodique 3 est alimenté en gaz oxygéné par un circuit d'alimentation 6 en gaz oxygéné et rejette un effluent par un circuit d'évacuation 7 des effluents.

Le circuit d'évacuation 7 des effluents est prolongé par un circuit représenté généralement par 8 qui est un circuit de recyclage des effluents et qui rejoint le circuit d'alimentation en gaz oxygéné au point de jonction 9.

Le circuit de recyclage 8 comporte d'abord un dispositif 10 destiné à assécher le gaz effluent, ou plus exactement à évacuer l'essentiel de l'eau de réaction qui est contenu dans ce gaz effluent.

Ce dispositif de séparation eau/ gaz, est par exemple un condenseur ou un cyclone statique. Il comporte une purge pour l'évacuation de l'eau qui a été séparée.

En aval du dispositif de séparation d'eau, le circuit de recyclage 8 comporte un piquage muni d'une vanne 11 destinée à purger le circuit de recyclage.

Le circuit de recyclage comporte ensuite un surpresseur 12 destiné à augmenter la pression du gaz effluent.

En aval du supresseur le circuit de recyclage comporte un piquage destiné à réaliser une alimentation complémentaire en gaz neutre repérée généralement par 13. Ce moyen d'alimentation complémentaire 13 en gaz neutre est constitué d'un réservoir 14 de gaz neutre sous pression relié par l'intermédiaire d'une conduite comportant une vanne 15 au circuit de recyclage 8.

Le surpresseur est pilotable, ce qui signifie que sa vitesse de rotation peut être commandée de façon à régler la pression de sortie du gaz.

Le circuit d'alimentation en gaz oxygéné 6 est relié au point de jonction 9 à des moyens d'alimentation en gaz riche en oxygène, par l'intermédiaire d'un détendeur piloté 17. Ces moyens sont constitués par exemple d'une réserve 16 d'oxygène liquide ou d'un générateur d'oxygène alimenté en peroxyde d'hydrogène, ou d'une réserve d'oxygène gazeux sous haute pression. L'oxygène est délivré à une pression relativement élevée, par exemple voisine de 5 bars.

Afin de réguler le fonctionnement de la pile à combustible, le circuit d'alimentation en gaz oxygéné 6 comporte entre le point de jonction 9 avec le circuit de recyclage 8 du gaz effluent et l'entrée du compartiment cathodique 3, un dispositif 18 pour mesurer la teneur en oxygène du mélange gazeux alimentant le compartiment cathodique de la pile à combustible. Ce moyen de mesure de la teneur en oxygène est par exemple un oxygénomètre connu en lui-même. Il est relié à un module de commande et de régulation 19 par l'intermédiaire d'une liaison 20.

Le module de commande et de régulation 19 peut recevoir une consigne de puissance appelée 21, et il peut émettre des commandes par l'intermédiaire la liaison 22 vers le détendeur piloté 17 et par l'intermédiaire de la liaison 23 vers le surpresseur 12.

Le circuit de recyclage de gaz effluent transporte du gaz effluent dont la composition est définie essentiellement par la nature du gaz neutre qui peut être introduit dans le circuit. Ce gaz neutre contenu dans le réservoir 14 est par exemple de l'azote. Il peut également être du dioxyde carbone, ou un mélange de ces deux gaz ou encore un autre gaz neutre. Il peut être pur ou peut contenir des impuretés en quantité limitée.

En outre, le gaz effluent peut contenir de l'eau ou de la vapeur d'eau.

On va maintenant décrire le fonctionnement du circuit d'alimentation en gaz oxygéné des compartiments cathodiques de la pile à combustible.

D'une façon générale, le circuit qui vient d'être décrit a pour objet d'alimenter le compartiment cathodique en un gaz constitué d'oxygène dilué dans au moins 60% de gaz neutre, de façon à ne pas détériorer trop rapidement la membrane réactive. La teneur en oxygène du mélange doit cependant être suffisante pour que la pile puisse fonctionner.

Lorsque le gaz neutre est essentiellement de l'azote, le circuit d'alimentation a pour objet de reconstituer un gaz d'alimentation comparable à de l'air. Pour cela l'oxygène quasiment pur qui provient de la source d'oxygène 16 est mélangé au point de jonction 9 avec le gaz recyclé qui est essentiellement de l'azote, de façon à constituer un gaz mélangé constitué de 15 à 30% d'oxygène et du complément en azote.

Après passage dans la cellule réactive, l'oxygène, qui réagit avec les protons fournis par l'hydrogène pour former de l'eau, est consommé pour l'essentiel. De ce fait, le gaz effluent qui ressort contient principalement de l'azote, de l'eau sous forme de vapeur ou sous forme de liquide, et éventuellement un peu d'oxygène.

Ce gaz effluent qui circule dans le circuit de recyclage 8, lorsqu'il passe dans le dispositif de séparation d'eau 10, est asséché afin d'avoir une humidité relative de préférence inférieure à 100%. En effet, il est préférable que le gaz qui alimente le compartiment cathodique ne comporte pas trop d'eau, mais il est néanmoins souhaitable qu'il contienne un peu d'humidité favorable à une bonne longévité de la membrane échangeuse de protons.

Le gaz effluent qui ressort de la cellule réactive est en général à une pression voisine des 1 bar, soit la pression ambiante. Mais le gaz qui alimente cette cellule réactive doit être à une pression sensiblement supérieure de façon à compenser la perte de charge à la traversée de la cellule réactive.

Cette pression à l'entrée est par exemple de l'ordre de 1,5 bar, et peut varier entre un peu moins de 1,5 bar et un peu plus de 1,5 bar et par exemple entre 1,2 et 1,6 bar.

Cette surpression d'entrée est réalisée par le surpresseur 12 qui est destiné à comprimer le gaz effluent de façon à l'amener à la pression d'entrée dans la cellule réactive.

De même, la pression de l'oxygène doit être ajustée pour être sensiblement égale à la pression du gaz effluent recyclé en sortie du surpresseur. Cet ajustement des pressions est nécessaire pour qu'il ait un bon mélange des deux gaz et une bonne alimentation du compartiment cathodique. Cet ajustement de la pression d'oxygène est réalisé par le détendeur piloté 17 qui est alimenté en oxygène sous pression élevée par la source d'oxygène 16. La pression de l'oxygène en amont du détendeur est par exemple de 5 bars.

Le circuit d'alimentation en gaz de la cellule cathodique comportant un circuit fermé. De ce fait, le gaz contenu dans ce circuit peut s'enrichir en polluant gazeux divers et il peut être souhaitable de le renouveler de temps en temps. C'est pour cela qu'il est prévu un moyen de purge 11.

Ce moyen de purge est utilisé périodiquement pour vider partiellement ou totalement le circuit fermé et évacuer du gaz pollué de façon à pouvoir le remplacement à l'aide du dispositif d'appoint en gaz neutre 13 par du gaz neutre plus pur.

La fréquence avec laquelle le circuit doit être purgé est fonction du régime de fonctionnement, si bien que la purge est faite de façon discontinue sans que ce soit nécessairement à intervalles réguliers.

La puissance fournie par la pile est fonction de la quantité d'oxygène consommée par unité de temps, par conséquent du débit d'oxygène. La régulation de la puissance fournie par la pile se fait en régulant la teneur en oxygène du mélange gazeux d'alimentation du compartiment cathodique. Cette régulation de la teneur en oxygène du gaz d'alimentation qui peut varier de préférence entre 15% et 30%, se fait en utilisant le moyen de régulation 19 relié à la mesure de teneur en oxygène 18 du gaz d'alimentation.

Le principe est le suivant : un signal 21 représentatif de la puissance à fournir par la pile à combustible est envoyé au système de régulation 19 qui élabore une consigne de teneur en oxygène. Le système de régulation 19 compare cette consigne de teneur en oxygène à la teneur en oxygène mesurée à l'aide du moyen de mesure en oxygène 18, et en fonction de l'écart constaté, ajuste d'une part les conditions de fonctionnement du détenteur piloté 17, et d'autre part du surpresseur 12 de façon à ce que les conditions de fonctionnement du circuit soient telles que la teneur en oxygène du mélange gazeux qui alimente la pile en combustible soit voisine de la valeur de consigne.

Le système qui vient d'être décrit a l'avantage d'être alimenté en oxygène pur sous forte pression, ou plus généralement en gaz oxygéné à forte teneur en oxygène et qui utilise peu d'espace, tout en utilisant une membrane destinée à fonctionner en présence d'air alimentée avec un gaz comparable à de l'air de façon à conserver une durée de vie longue pour la membrane active, et d'autre part, de ne pas rejeter dans l'atmosphère de gaz neutre tel que de l'azote.

Certes de temps en temps un peu d'azote peut être rejeté dans l'atmosphère mais il est rejeté dans une quantité suffisamment faible pour que, dans un sous-marin par exemple, ce rejet puisse être absorbé par le système de régénération de l'air.

Le dispositif qui vient d'être décrit a été décrit avec une pile à combustible à membrane échangeuse de protons, mais il peut être adapté à toutes piles à combustible comportant des membranes actives destinées à fonctionner en présence d'un gaz pas trop riche en oxygène.

Ce dispositif peut être utilisé par exemple pour alimenter les auxiliaires ou assurer une propulsion d'appoint d'un sous-marin.

## Revendications

1. Pile à combustible (1) du type à membrane échangeuse de protons et conçue pour équiper un sous-marin, comportant un circuit d'alimentation (6) en gaz oxygéné de la cathode (3) relié à une source de gaz oxygéné riche en oxygène (16) et un circuit d'évacuation (7) du gaz effluent de la cathode (3), le circuit d'évacuation du gaz effluent étant prolongé jusqu'au circuit d'alimentation en gaz oxygéné en amont de la cathode par un circuit de recyclage (8), de façon à permettre l'alimentation de la cathode par un mélange d'oxygène et de gaz effluent recyclé, **caractérisé en ce que** le circuit de recyclage (8) comprend un moyen (13) pour faire un appoint en gaz neutre.

2. Pile à combustible selon la revendication 1, **caractérisé en ce que**, en amont du point de jonction (9) du circuit de recyclage (8) avec le circuit d'alimentation (6) de la cathode, le circuit de recyclage (8) de gaz effluent comprend un moyen (10) pour évacuer de l'eau contenue dans le gaz effluent, un moyen (11) pour purger au moins partiellement le circuit de gaz effluent, et un moyen (12) pour comprimer le gaz effluent , et **en ce que** le circuit d'alimentation (6) de la cathode, comprend, en amont du point de jonction (9) avec le circuit de recyclage (8) de gaz effluent, un moyen (17) pour ajuster la pression d'alimentation en gaz oxygéné.

3. Pile à combustible selon la revendication 2, **caractérisée en ce que** le moyen (12) pour comprimer le gaz effluent est un suppresseur pilotable, **en ce que** le moyen (17) pour ajuster la pression d'alimentation en gaz oxygéné est pilotable et, par exemple, est un détendeur pilotable, **en ce que** un dispositif (18) pour mesurer la teneur en oxygène du gaz d'alimentation de la cathode est disposé sur le circuit d'alimentation de la cathode entre le point de jonction (9) avec le circuit de gaz effluent recyclé et la cathode (3), et **en ce que** le dispositif (18) de mesure de la teneur en oxygène, le moyen (17) pour ajuster la pression d'alimentation en gaz oxygéné et le moyen (12) pour comprimer le gaz effluent sont reliés à un moyen (19) de commande et de régulation.

4. Pile à combustible selon la revendication 2 ou la revendication 3, **caractérisée en ce que** la source de gaz oxygéné (16) est une source d'oxygène et **en ce que** la source de gaz neutre d'appoint (13) est une source d'azote ou de dioxyde de carbone ou d'un mélange de ces deux gaz.

## Claims

1. Proton exchange membrane fuel cell (1) designed to equip a submarine, comprising a circuit (6) for supplying oxygenated gas to the cathode (3) connected to a source of oxygen-rich oxygenated gas (16) and a circuit (7) for discharging the waste gas from the cathode (3), wherein the waste gas discharge circuit is extended up to the oxygenated gas supply circuit upstream of the cathode by a recycling circuit (8) in order to enable the cathode to be supplied by a mixture of oxygen and recycled waste gas, **characterised in that** the recycling circuit (8) comprises a means (13) to provide a back-up of neutral gas.

2. Fuel cell according to claim 1, **characterised in that** upstream of the joining point (9) of the recycling circuit (8) with the supply circuit (6) of the cathode the waste gas recycling circuit (8) comprises a means (10) for discharging the water contained in the waste gas, a means (11) for at least partially scavenging the waste gas circuit and a means (12) for compressing the waste gas, and that upstream of the joining point (9) with the waste gas recycling circuit (8) the supply circuit (6) of the cathode comprises a means (17) for adjusting the supply pressure of oxygenated gas.

3. Fuel cell according to claim 2, **characterised in that** the means (12) for compressing the waste gas is a controllable suppressor, that the means (17) for adjusting the supply pressure of oxygenated gas is controllable and is a controllable pressure-reducing valve, for example, and that a device (18) for measuring the oxygen content of the supply gas of the cathode is arranged on the supply circuit of the cathode between the joining point (9) with the recycled waste gas circuit and the cathode (3), and that the device (18) for measuring the oxygen content, the means (17) for adjusting the supply pressure of oxygenated gas and the means (12) for compressing the waste gas are connected to an automatic control device.

4. Fuel cell according to claim 2 or claim 3, **characterised in that** the source of oxygenated gas (16) is a source of oxygen and that the source of back-up neutral gas (13) is a source of nitrogen or carbon dioxide or a mixture of these two gases.

## Patentansprüche

1. Brennstoffzelle (1) vom Typ Protonenaustauschmembran-Brennstoffzelle und für ein Unterseeboot vorgesehen, die einen Kreislauf (6) für die Versorgung der Kathode (3) mit einem sauerstoffhaltigen Gas aufweist, der mit einer Quelle (16) für das sauerstoffhaltige Gas, das reich an Sauerstoff ist, verbunden ist, und einen Kreislauf (7) für die Ableitung des aus der Kathode (3) ausströmenden Gases aufweist, wobei sich der Kreislauf für die Ableitung des ausströmenden Gases bis zu dem Kreislauf für die Versorgung mit dem sauerstoffhaltigen Gas stromaufwärts der Kathode über einen Rückführungskreislauf (8) fortsetzt, derart, dass er die Versorgung der Kathode mit einem Gemisch aus Sauerstoff und dem rückgeführten ausströmenden Gas ermöglicht, **dadurch gekennzeichnet, dass** der Rückführungskreislauf (8) ein Mittel (13) umfasst, um ein neutrales Gas nachzufüllen.

2. Brennstoffzelle nach Anspruch 1, **dadurch gekennzeichnet, dass**, stromaufwärts des Verbindungspunktes (9) des Rückführungskreislaufs (8) mit dem Kreislauf (6) für die Versorgung der Kathode, der Kreislauf (8) für die Rückführung des ausströmenden Gases ein Mittel (10) umfasst, um Wasser abzuleiten, das in dem ausströmenden Gas enthalten ist, ein Mittel (11) umfasst, um den Kreislauf für das ausströmende Gas mindestens teilweise zu entleeren, und ein Mittel (12) umfasst, um das ausströmende Gas zu verdichten, und dass der Kreislauf (6) für die Versorgung der Kathode, stromaufwärts des Verbindungspunktes (9) mit dem Kreislauf (8) für die Rückführung des ausströmenden Gases, ein Mittel (17) umfasst, um den Druck der Versorgung mit dem sauerstoffhaltigen Gas einzustellen.

3. Brennstoffzelle nach Anspruch 2, **dadurch gekennzeichnet, dass** das Mittel (12) zum Verdichten des ausströmenden Gases ein steuerbarer Suppressor ist, dass das Mittel (17) zum Einstellen des Drucks der Versorgung mit dem sauerstoffhaltigen Gas steuerbar ist und, zum Beispiel, ein steuerbares Druckminderventil ist, dass eine Vorrichtung (18) zum Messen des Sauerstoffgehalts des Gases für die Versorgung der Kathode in dem Kreislauf für die Versorgung der Kathode zwischen dem Verbindungspunkt (9) mit dem Kreislauf für das rückgeführte ausströmende Gas und der Kathode (3) angeordnet ist und dass die Vorrichtung (18) zum Messen des Sauerstoffgehalts, das Mittel (17) zum Einstellen des Drucks der Versorgung mit dem sauerstoffhaltigen Gas und das Mittel (12) zum Verdichten des ausströmenden Gases mit einem Mittel (19) zur Steuerung und Regelung verbunden sind.

4. Brennstoffzelle nach Anspruch 2 oder Anspruch 3, **dadurch gekennzeichnet, dass** die Quelle (16) für das sauerstoffhaltige Gas eine Sauerstoffquelle ist und dass die Quelle (13) für das neutrale Nachfüllgas eine Stickstoff-Quelle oder eine Kohlendioxid-Quelle oder eine Quelle für ein Gemisch dieser beiden Gase ist.
